# EUROPÄISCHE PATENTANMELDUNG

(11) **EP 1 859 975 A2**
(43) Veröffentlichungstag der Anmeldung: **28.11.2007**
(21) Anmeldenummer: 06026165.8
(22) Anmeldetag: 18.12.2006
(51) Int. Cl.: B60J 1/06

(54) **Panoramascheibenanordnung eines Kraftfahrzeugs**

(30) Priorität: 26.05.2006 DE 102006024616
(71) Anmelder: Volkswagen Aktiengesellschaft, 38436 Wolfsburg (DE)
(72) Erfinder: Welsch, Frank, 38179 Schwülper (DE); Schütz, Joachim, 38543 Hillerse (DE); Kelm, Andreas, 29392 Wesendorf (DE); Uznanski, Jaroslaw, 38446 Wolfsburg (DE)

(57) **Zusammenfassung**

Panoramascheibenanordnung eines Kraftfahrzeugs, umfassend einen Frontscheibenabschnitt (1) sowie einen Dachscheibenabschnitt (2), der sich zumindest abschnittsweise oberhalb der Vordersitze des Kraftfahrzeugs erstreckt, wobei die Panoramascheibenanordnung Trennmittel (3) umfasst, die sich in Querrichtung des Kraftfahrzeugs erstrecken, insbesondere im Bereich der A-Säulen, wobei die Trennmittel (3) den Frontscheibenabschnitt (1) und den Dachscheibenabschnitt (2) zumindest optisch voneinander trennen.

## Beschreibung

Die vorliegende Erfindung betrifft Panoramascheibenanordnungen eines Kraftfahrzeugs gemäß den Oberbegriffen der Ansprüche 1, 4 und 7.

Die Ausführungsformen gemäß den Ansprüchen 1, 4 und 7 unterscheiden sich lediglich durch die Anordnung der Panoramascheibe oder der Panoramascheiben. Bei der Panoramascheibenanordnung gemäß Anspruch 1 erstreckt sich die Anordnung über einen Frontscheibenabschnitt und über einen Dachscheibenabschnitt der zumindest abschnittsweise oberhalb der Vordersitze angeordnet ist. Bei der Panoramascheibenanordnung gemäß Anspruch 4 erstreckt sich die Anordnung zumindest über einen Großteil des Daches, insbesondere über einen Bereich oberhalb der Vordersitze und einen Bereich oberhalb der Hintersitze. Bei der Panoramascheibenanordnung gemäß Anspruch 7 erstreckt sich die Anordnung über eine Heckscheibe und einen sich daran anschließenden Dachabschnitt, der zumindest teilweise oberhalb der Hintersitze des Kraftfahrzeuges angeordnet ist. Die vorgenannten Panoramascheibenanordnungen können auch einzeln oder sämtlich miteinander kombiniert werden. Derartige Panoramascheibenanordnungen sind bekannt und werden beispielsweise als Panoramafrontscheibe oder Panoramaheckscheibe bezeichnet.

Eine Panoramascheibenanordnung der eingangs genannten Art ist aus der europäischen Patentanmeldung EP 1 405 744 A1 bekannt. Bei der darin beschriebenen Ausführungsform erstreckt sich beispielsweise eine einteilige Scheibe von einem Bereich zwischen Motorhaube und Schalttafel über den gesamten Frontscheibenbereich in das Dach hinein, bis beispielsweise in den Bereich der B-Säulen, so dass im Wesentlichen auch die Vordersitze unterhalb des Dachabschnittes der Panoramascheibe angeordnet sind. Im Bereich der B-Säulen endet die Panoramascheibe an einem Dachquerträger. Die Fertigung und der Einbau einer derartig großen Panoramascheibe, die sich über den gesamten Frontscheibenbereich und einen Großteil des Daches einstückig erstreckt, ist vergleichsweise aufwändig.

Das der vorliegenden Erfindung zugrunde liegende Problem ist die Schaffung einer Panoramascheibenanordnung der eingangs genannten Art, die einfacher und/oder kostengünstiger gestaltet ist.

Dies wird erfindungsgemäß durch eine Panoramascheibenanordnung der eingangs genannten Art mit den kennzeichnenden Merkmalen eines der Ansprüche 1, 4 und 7 erreicht. Die Unteransprüche betreffen bevorzugte Weiterbildungen der Erfindung.

Gemäß Anspruch 1 ist vorgesehen, dass die Panoramascheibenanordnung Trennmittel umfasst, die sich in Querrichtung des Kraftfahrzeugs erstrecken, insbesondere im Bereich der A-Säulen, wobei die Trennmittel den Frontscheibenabschnitt und den Dachscheibenabschnitt zumindest optisch voneinander trennen. Analog dazu ist gemäß Anspruch 4 vorgesehen, dass die Panoramascheibenanordnung Trennmittel umfasst, die sich in Querrichtung des Kraftfahrzeugs erstrecken, insbesondere im Bereich der B-Säulen, wobei die Trennmittel den ersten Dachscheibenabschnitt und den zweiten Dachscheibenabschnitt zumindest optisch voneinander trennen. Analog dazu ist gemäß Anspruch 7 vorgesehen, dass die Panoramascheibenanordnung Trennmittel umfasst, die sich in Querrichtung des Kraftfahrzeugs erstrecken, insbesondere im Bereich der C-Säulen, wobei die Trennmittel den Dachscheibenabschnitt und den Heckscheibenabschnitt zumindest optisch voneinander trennen.

Durch das Vorsehen der vorgenannten Trennmittel lässt sich die Panoramascheibenanordnung einfacher und/oder kostengünstiger gestalten. Beispielsweise können der Frontscheibenabschnitt und der Dachscheibenabschnitt jeweils durch eine separate Scheibe gebildet werden, die insbesondere im Bereich der Trennmittel aneinander angrenzen. Analog dazu können der erste und der zweite Dachscheibenabschnitt jeweils durch eine separate Scheibe gebildet werden, die insbesondere im Bereich der Trennmittel aneinander angrenzen. Analog dazu können der Dachscheibenabschnitt und der Heckscheibenabschnitt jeweils durch eine separate Scheibe gebildet werden, die insbesondere im Bereich der Trennmittel aneinander angrenzen. Durch die Aufteilung der sich über einen großen Bereich erstreckenden Panoramascheibenanordnung auf zwei Scheiben wird die Fertigung der Panoramascheibenanordnung vereinfacht.

Es besteht alternativ die Möglichkeit, dass der Frontscheibenabschnitt und der Dachscheibenabschnitt beziehungsweise der erste und der zweite Dachscheibenabschnitt beziehungsweise der Dachscheibenabschnitt und der Heckscheibenabschnitt Teil einer durchgehenden Scheibe sind.

Es besteht die Möglichkeit, dass die Trennmittel einen Steg und/oder eine Dichtung umfassen, die sich zwischen den separaten Scheiben erstrecken. Dabei können der Steg und/oder die Dichtung in Fahrzeuglängsrichtung sehr kurz sein, beispielsweise nur einige Millimeter lang sein.

Insbesondere besteht die Möglichkeit, dass die Trennmittel in Längsrichtung des Kraftfahrzeugs eine Ausdehnung kleiner 100 mm, insbesondere eine Ausdehnung kleiner 60 mm, vorzugsweise eine Ausdehnung kleiner 40 mm aufweisen. Für den Fall, dass die Trennmittel lediglich durch den vorgenannten Steg und/oder die vorgenannte Dichtung gebildet werden, kann die Ausdehnung in Fahrzeuglängsrichtung sogar noch deutlich kürzer sein, beispielsweise weniger als 10 mm betragen, insbesondere etwa 2 bis 5 mm betragen. Durch die sehr schmale Ausführung der Trennmittel in Fahrzeuglängsrichtung ergibt sich für die Kraftfahrzeuginsassen eine großzügige Optik der Panoramascheibenanordnung, die durch die unter Umständen kaum wahrnehmbaren Trennmittel nicht oder nur in einem sehr geringen Umfang beeinträchtigt wird.

Es besteht die Möglichkeit, dass die Trennmittel einen Dachquerträger umfassen. Der Dachquerträger kann zur Stabilisierung der Panoramascheibenanordnung beitragen und damit die Herstellungskosten senken.

Dabei kann vorgesehen sein, dass die Panoramascheibenanordnung eine Verkleidung umfasst, die die Unterseite des Querträgers zumindest teilweise verdeckt. Auf diese Weise ergibt sich für die Insassen des Kraftfahrzeugs eine ansprechende Optik.

Es besteht weiterhin die Möglichkeit, dass die Panoramascheibenanordnung Sensormittel für Regen und/oder Licht umfasst. Auf diese Weise können automatisch Scheibenwischer betätigt werden. Weiterhin können die für das Licht vorgesehenen Sensormittel Einfluss auf die Steuerung der Klimaanlage nehmen.

Dabei kann insbesondere vorgesehen sein, dass die Panoramascheibenanordnung Zuleitungen für die Sensormittel umfasst, die zumindest abschnittsweise zwischen dem Dachquerträger und der Verkleidung verlaufen. Auf diese Weise können die Zuleitungen für die Insassen des Kraftfahrzeugs kaschiert werden.

Es besteht die Möglichkeit, dass der Dachquerträger mit der durchgehenden Scheibe oder den separaten Scheiben verklebt ist.

Alternativ oder zusätzlich kann vorgesehen sein, dass der Dachquerträger zumindest abschnittsweise zwischen den separaten Scheiben angeordnet ist. Bei dieser Ausführungsform baut der Dachquerträger in vertikaler Richtung wenig auf, so dass sich ebenfalls eine ansprechende Optik für die Insassen des Kraftfahrzeugs ergibt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Ansicht eines Kraftfahrzeuges mit einer Panoramascheibenanordnung im Frontscheibenbereich und im daran anschließenden Dachbereich;
- Fig. 2: eine schematische Ansicht eines Kraftfahrzeuges mit einer erfindungsgemäßen Panoramascheibenanordnung im Frontscheibenbereich, im gesamten Dachbereich und im Heckscheibenbereich;
- Fig. 3: eine Ansicht gemäß den Pfeilen A-A in Fig. 1 auf eine erste Ausführungsform der Trennmittel;
- Fig. 4: eine Fig. 3 entsprechende Ansicht auf eine zweite Ausführungsform der Trennmittel;
- Fig. 5: eine Fig. 3 entsprechende Ansicht auf eine dritte Ausführungsform der Trennmittel;
- Fig. 6: eine Fig. 3 entsprechende Ansicht auf eine vierte Ausführungsform der Trennmittel;
- Fig. 7: eine Fig. 3 entsprechende Ansicht auf eine fünfte Ausführungsform der Trennmittel;
- Fig. 8: eine Ansicht gemäß den Pfeilen B-B in Fig. 2;
- Fig. 9: eine Ansicht gemäß den Pfeilen C-C in Fig. 2.

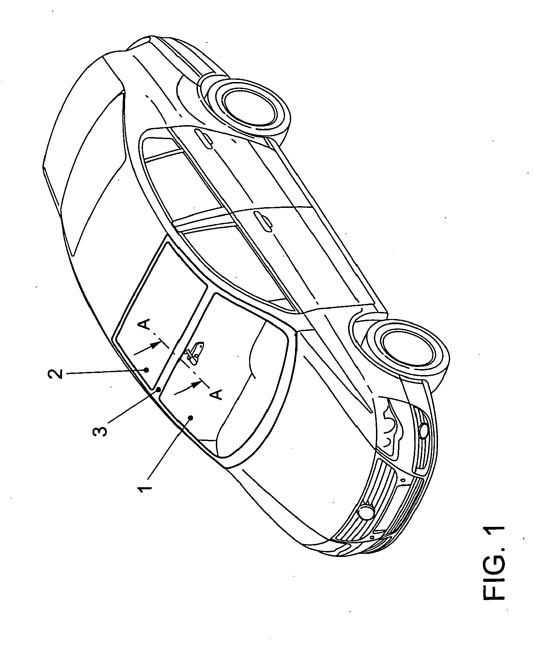

Aus Fig. 1 ist ein Kraftfahrzeug mit einer Panoramascheibenanordnung ersichtlich, die einen Frontscheibenabschnitt 1 und einen ersten Dachscheibenabschnitt 2 umfasst. Der erste Dachscheibenabschnitt 2 erstreckt sich dabei über die Vordersitze des Kraftfahrzeuges bis etwa in den Bereich der B-Säule. Der Frontscheibenabschnitt 1 erstreckt sich von dem ersten Dachscheibenabschnitt 2 nach vorne und nach unten in einen Bereich zwischen Motorhaube und Schalttafel.

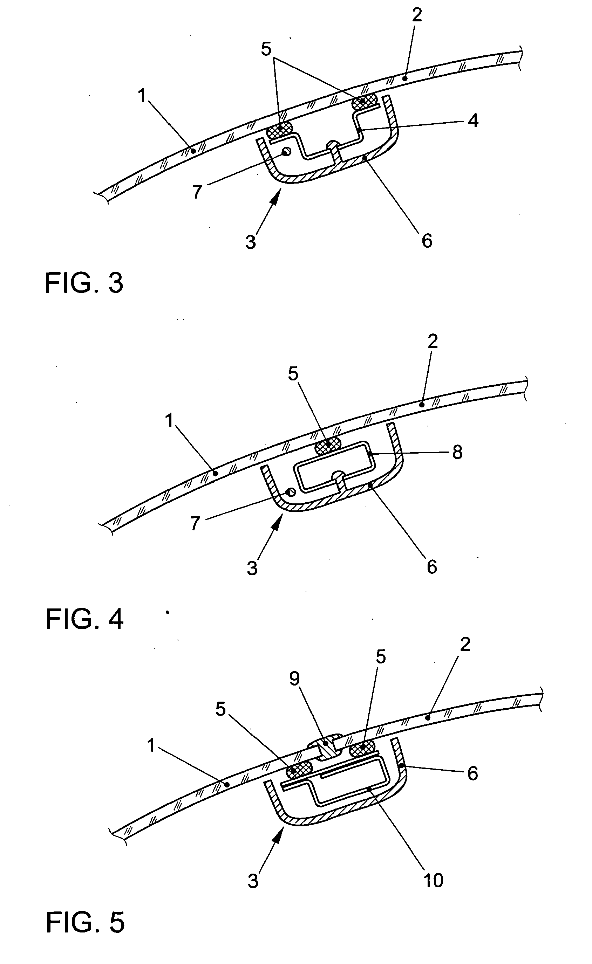

Aus Fig. 1 sind ebenfalls Trennmittel 3 ersichtlich, die den Frontscheibenabschnitt 1 zumindest optisch von dem ersten Dachscheibenabschnitt 2 trennen. Die unterschiedlichen Ausführungsformen dieser Trennmittel 3 sind aus den Fig. 3 bis 7 detailliert ersichtlich.

Fig. 3 zeigt eine Ausführungsform der Panoramascheibenanordnung, bei der der Frontscheibenabschnitt 1 und der erste Dachscheibenabschnitt 2 durch eine einzige durchgehende Scheibe gebildet werden. Die Trennmittel 3 umfassen einen Dachquerträger 4, der sich beispielsweise zwischen den beiden in Fig. 3 nicht abgebildeten A-Säulen erstreckt. Der Querträger 4 weist einen U-förmigen Querschnitt mit nach außen umgebogenen Enden der U-Schenkel auf, wobei auf diese nach außen umgebogenen Enden der U-Schenkel Kleber 5 zur Verbindung des Querträgers 4 mit der Scheibe aufgebracht ist. Die Unterseite des Querträgers 4 ist von einer Verkleidung 6 abgedeckt, die beispielsweise über entsprechende Rastmittel auf den Querträger 4 aufgeklippst ist. Es kann weiterhin vorgesehen sein, dass zwischen der Verkleidung 6 und dem Querträger 4 eine oder mehrere Zuleitungen 7 für nicht abgebildete Sensormittel verlaufen.

Fig. 4 zeigt ebenfalls eine Ausführungsform einer erfindungsgemäßen Panoramascheibenanordnung mit einer einteiligen Scheibe, die den Frontscheibenabschnitt 1 und den ersten Dachscheibenabschnitt 2 ausbildet. Auch bei dieser Ausführungsform ist ein Querträger 8 vorgesehen, der im Gegensatz zu dem Querträger 4 nicht als U-Profil sondern als geschlossenes Rechteckprofil ausgebildet ist. Auch dieser Querträger kann über Kleber 5 mit der einteiligen Scheibe verbunden sein. Auch an diesem Dachquerträger 8 kann eine Verkleidung 6 befestigt werden, wobei bei dem Ausführungsbeispiel gemäß Fig. 4 ebenfalls Zuleitungen 7 eingezeichnet sind.

Die Ausführungsform gemäß Fig. 5 unterscheidet sich von den vorhergehenden Ausführungsformen dadurch, dass der Frontscheibenabschnitt 1 und der erste Dachabschnitt 2 jeweils von einer separaten Scheibe gebildet sind, die im Bereich der Trennmittel 3 aneinander angrenzen. Zwischen diesen beiden Scheiben erstreckt sich in Querrichtung des Kraftfahrzeuges ein Steg 9, der als Blende und/oder als Dichtung ausgebildet sein kann. Die Trennmittel 3 gemäß Fig. 5 umfassen ebenfalls einen Dachquerträger 10, der in diesem Ausführungsbeispiel als Rollprofil ausgebildet ist.

Es besteht durchaus die Möglichkeit, bei dem Ausführungsbeispiel gemäß Fig. 5 Dachquerträger 4, 8 gemäß den Ausführungsbeispielen 3, 4 zu verwenden. Alternativ dazu kann auch bei den Ausführungsbeispielen gemäß Fig. 3 und Fig. 4 ein Querträger 10 gemäß Fig. 5 verwendet werden.

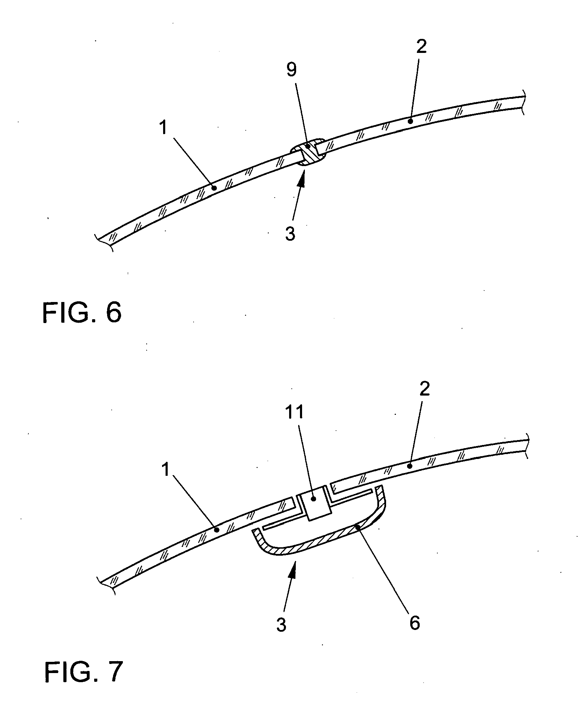

Die Ausführungsform gemäß Fig. 6 umfasst ebenfalls separate Scheiben, die als Frontscheibenabschnitt 1 und als erster Dachscheibenabschnitt 2 dienen. Die Trennmittel 3 umfassen lediglich den Steg 9, der sich in Fahrzeugquerrichtung zwischen den Scheiben erstreckt und beispielsweise als Blende und/oder Dichtung ausgebildet sein kann. Auf diese Weise kann die Ausdehnung der Trennmittel 3 in Fahrzeuglängsrichtung äußerst klein sein.

Bei der Ausführungsform gemäß Fig. 7 sind ebenfalls zwei separate Scheiben vorgesehen, die jeweils den Frontscheibenabschnitt 1 beziehungsweise den ersten Dachscheibenabschnitt 2 bilden. Die Trennmittel 3 umfassen einen Dachquerträger 11 und eine diesen nach unten abdeckende Verkleidung 6. Der Dachquerträger 11 ist dabei im Wesentlichen als Rechteckprofil mit zwei sich in Fahrzeuglängsrichtung nach vorne und nach hinten erstreckenden Schenkeln ausgebildet. Der Dachquerträger 11 verläuft zwischen den beiden Scheiben, die den Frontscheibenabschnitt 1 und den ersten Dachscheibenabschnitt 2 bilden.

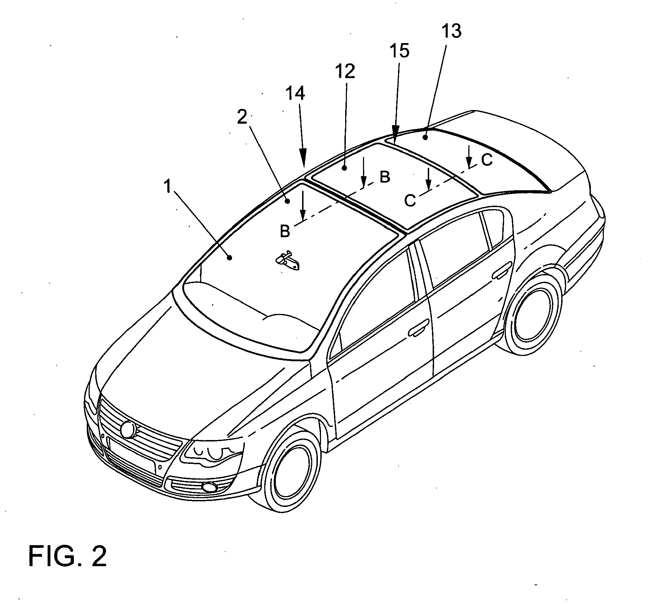

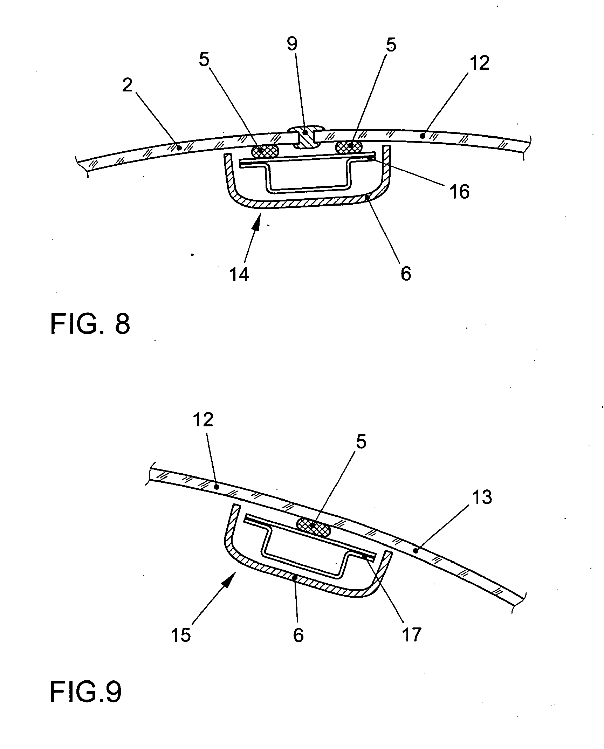

Aus Fig. 2 ist ein Kraftfahrzeug ersichtlich, das zusätzlich zu einer Panoramafrontscheibe auch eine Panoramascheibenanordnung mit einem zweiten Dachscheibenabschnitt 12 und einem Heckscheibenabschnitt 13 umfasst. Auf diese Weise ergibt sich ebenfalls eine Panoramascheibenanordnung über den Vordersitzen und den Hintersitzen des Kraftfahrzeuges, die einen ersten Dachscheibenabschnitt 2 und einen zweiten Dachscheibenabschnitt 12 umfasst. Zwischen diesen beiden Dachscheibenabschnitten 2, 12 sind Trennmittel 14 vorgesehen, die aus Fig. 8 deutlicher ersichtlich sind. Zwischen dem zweiten Dachscheibenabschnitt 12 und dem Heckscheibenabschnitt 13 sind Trennmittel 15 vorgesehen, die aus Fig. 9 detailliert ersichtlich sind.

Die aus Fig. 8 ersichtlichen Trennmittel 14 können insbesondere etwa im Bereich der B-Säulen angeordnet sein. Der erste Dachscheibenabschnitt 2 und der zweite Dachscheibenabschnitt 12 sind jeweils als separate Scheibe ausgebildet, die im Bereich der Trennmittel 14 aneinander angrenzen. Zwischen diesen Scheiben erstreckt sich ebenfalls in Querrichtung ein Steg 9, der wie bei den Ausführungsbeispielen gemäß Fig. 5 und Fig. 6 als Blende und/oder Dichtung dienen kann. Die Trennmittel 14 umfassen weiterhin einen Dachquerträger 16, der einen im Wesentlichen rechteckigen Querschnitt aufweist und mit den B-Säulen verbunden sein kann. Der Dachquerträger 16 ist über Kleber 5 mit den Scheiben verbunden. Weiterhin ist der Dachquerträger 16 durch eine Verkleidung 6 nach unten abgedeckt.

Es besteht durchaus die Möglichkeit, die Trennmittel 14 anders zu gestalten. Beispielsweise können für die Trennmittel 14 Gestaltungen gemäß den Fig. 3 bis Fig. 7 gewählt werden.

Die aus Fig. 9 ersichtliche Panoramascheibenanordnung umfasst eine durchgehende Scheibe, die den zweiten Dachscheibenabschnitt 12 und den Heckscheibenabschnitt 13 ausbildet. Die Trennmittel 15 umfassen wiederum einen Querträger 17, der einen im Wesentlichen rechteckigen Querschnitt aufweist und sich beispielsweise zwischen den beiden C-Säulen erstrecken kann. Die durchgehende Scheibe 7 ist über einen Kleber 5 mit dem Dachquerträger 17 verbunden. Der Dachquerträger 17 ist nach unten durch eine Verkleidung 6 abgedeckt.

Es besteht durchaus die Möglichkeit, die Trennmittel 15 anders zu gestalten, beispielsweise analog zu den Ausführungsformen gemäß Fig. 3 bis Fig. 8.

### Bezugszeichenliste

- 1: Frontscheibenabschnitt
- 2: Erster Dachscheibenabschnitt
- 3, 14, 15: Trennmittel
- 4, 8, 10, 11, 16, 17: Dachquerträger
- 5: Kleber
- 6: Verkleidung
- 7: Zuleitung
- 8: Steg
- 12: zweiter Dachscheibenabschnitt
- 13: Heckscheibenabschnitt

## Patentansprüche

1. Panoramascheibenanordnung eines Kraftfahrzeugs, umfassend
- einen Frontscheibenabschnitt (1);
- einen Dachscheibenabschnitt (2), der sich zumindest abschnittsweise oberhalb der Vordersitze des Kraftfahrzeugs erstreckt;
**dadurch gekennzeichnet, dass** die Panoramascheibenanordnung Trennmittel (3) umfasst, die sich in Querrichtung des Kraftfahrzeugs erstrecken, insbesondere im Bereich der A-Säulen, wobei die Trennmittel (3) den Frontscheibenabschnitt (1) und den Dachscheibenabschnitt (2) zumindest optisch voneinander trennen.

2. Panoramascheibenanordnung nach Anspruch 1, **dadurch gekennzeichnet, dass** der Frontscheibenabschnitt (1) und der Dachscheibenabschnitt (2) Teil einer durchgehenden Scheibe sind.

3. Panoramascheibenanordnung nach Anspruch 1, **dadurch gekennzeichnet, dass** der Frontscheibenabschnitt (1) und der Dachscheibenabschnitt (2) jeweils durch eine separate Scheibe gebildet werden.

4. Panoramascheibenanordnung eines Kraftfahrzeugs, umfassend
- einen ersten Dachscheibenabschnitt (2) der sich zumindest abschnittsweise oberhalb der Vordersitze des Kraftfahrzeugs erstreckt;
- einen zweiten Dachscheibenabschnitt (12), der sich zumindest abschnittsweise oberhalb der Hintersitze des Kraftfahrzeugs erstreckt;
**dadurch gekennzeichnet, dass** die Panoramascheibenanordnung Trennmittel (14) umfasst, die sich in Querrichtung des Kraftfahrzeugs erstrecken, insbesondere im Bereich der B-Säulen, wobei die Trennmittel (14) den ersten Dachscheibenabschnitt (2) und den zweiten Dachscheibenabschnitt (12) zumindest optisch voneinander trennen.

5. Panoramascheibenanordnung nach Anspruch 4, **dadurch gekennzeichnet, dass** der erste Dachscheibenabschnitt (2) und der zweite Dachscheibenabschnitt (12) Teil einer durchgehenden Scheibe sind.

6. Panoramascheibenanordnung nach Anspruch 4, **dadurch gekennzeichnet, dass** der erste Dachscheibenabschnitt (2) und der zweite Dachscheibenabschnitt (12) jeweils durch eine separate Scheibe gebildet werden.

7. Panoramascheibenanordnung eines Kraftfahrzeugs, umfassend
- einen Dachscheibenabschnitt (12) der sich zumindest abschnittsweise oberhalb der Hintersitze des Kraftfahrzeugs erstreckt;
- einen Heckscheibenabschnitt (13);
**dadurch gekennzeichnet, dass** die Panoramascheibenanordnung Trennmittel (15) umfasst, die sich in Querrichtung des Kraftfahrzeugs erstrecken, insbesondere im Bereich der C-Säulen, wobei die Trennmittel (15) den Dachscheibenabschnitt (12) und den Heckscheibenabschnitt (13) zumindest optisch voneinander trennen.

8. Panoramascheibenanordnung nach Anspruch 7, **dadurch gekennzeichnet, dass** der Dachscheibenabschnitt (12) und der Heckscheibenabschnitt (13) Teil einer durchgehenden Scheibe sind.

9. Panoramascheibenanordnung nach Anspruch 7, **dadurch gekennzeichnet, dass** der Dachscheibenabschnitt (12) und der Heckscheibenabschnitt (13) jeweils durch eine separate Scheibe gebildet werden.

10. Panoramascheibenanordnung nach einem der Ansprüche 3, 6 oder 9, **dadurch gekennzeichnet, dass** die Trennmittel (3, 14, 15) einen Steg (9) und/oder eine Dichtung umfassen, die sich zwischen den separaten Scheiben erstrecken.

11. Panoramascheibenanordnung nach einem der Ansprüche 1 bis 10, **dadurch gekennzeichnet, dass** die Trennmittel (3, 14, 15) in Längsrichtung des Kraftfahrzeugs eine Ausdehnung kleiner 100 mm, insbesondere eine Ausdehnung kleiner 60 mm, vorzugsweise eine Ausdehnung kleiner 40 mm aufweisen.

12. Panoramascheibenanordnung nach einem der Ansprüche 1 bis 11, **dadurch gekennzeichnet, dass** die Trennmittel (3, 14, 15) einen Dachquerträger (4, 8, 10, 11, 16, 17) umfassen.

13. Panoramascheibenanordnung nach Anspruch 12, **dadurch gekennzeichnet, dass** die Panoramascheibenanordnung eine Verkleidung (6) umfasst, die die Unterseite des Dachquerträgers (4, 8, 10, 11, 16, 17) zumindest teilweise verdeckt.

14. Panoramascheibenanordnung nach einem der Ansprüche 1 bis 13, **dadurch gekennzeichnet, dass** die Panoramascheibenanordnung Sensormittel für Regen und/oder Licht umfasst.

15. Panoramascheibenanordnung nach Anspruch 14, **dadurch gekennzeichnet, dass** die Panoramascheibenanordnung Zuleitungen (7) für die Sensormittel umfasst, die zumindest abschnittsweise zwischen dem Dachquerträger (4, 8, 10, 11, 16, 17) und der Verkleidung (6) verlaufen.

16. Panoramascheibenanordnung nach einem der Ansprüche 12 bis 15, **dadurch gekennzeichnet, dass** der Dachquerträger (4, 8, 10, 11, 16, 17) mit der durchgehenden Scheibe oder den separaten Scheiben verklebt ist.

17. Panoramascheibenanordnung nach einem der Ansprüche 12 bis 16, **dadurch gekennzeichnet, dass** der Dachquerträger (11) zumindest abschnittsweise zwischen den separaten Scheiben angeordnet ist.
